# EUROPEAN PATENT APPLICATION

(11) **EP 2 933 563 A1**
(43) Date of publication of application: **21.10.2015**
(21) Application number: 13863525.5
(22) Date of filing: 12.12.2013
(51) Int. Cl.: F24C 1/00, G05G 9/04

(54) **FOOD PREPARATION SYSTEM**

(30) Priority: 13.12.2012 BR 102012031807
(71) Applicant: Whirlpool S.A., 04578-000 São Paulo - SP (BR)
(72) Inventor: HARTKE, Cristina Westphal, CEP-89221-404 Joinville - SC (BR); SANCHES, Eduardo Augusto de Carvalho, CEP-89221-650 Joinville - SC (BR); JUNIOR, Dorly Fernandes da Silva, CEP-89201-700 Joinville - SC (BR)
(74) Representative: Soldatini, Andrea
(86) International application number: PCT/BR2013/000565
(87) International publication number: WO 2014/089661

(57) **Abstract**

The present invention relates to a food preparation system, particularly applied to cooking equipment, stove or cooktop type, being comprised of technical and functional features specifically designed to assist and guide the user in preparing the food. More preferably, the present invention relates to a food preparation system, comprising a cooking device (E) composed of adjustable heat sources (F) whose powers are controlled by control mechanisms (M); a cooking utensil (U), wherein said cooking utensil (U) is formed by a wall envelope (1) having at least one indicative element (2) which correlates the type of food (A) with the amount (Q) to be prepared, and wherein said adjustable source of heat (F) is provided with a control mechanism (M) provided with at least one indicative element (3) corresponding to respective defined indication in the indicative element (2) disposed in said envelope wall (1) of the cooking utensil (U), and a time control device (T) related to the type and quantity of food to be prepared.

## Description

### Filed of the invention

The present invention relates to a food preparation system, particularly applied in cooking equipment, of the type stove or cooktop, being comprised of technical and functional features specially developed to assist and guide the users in preparing their food. More preferably, the present invention relates to a food preparation system consisting of the combination of the cooking appliance having at least an indicative element which correlates the food to its amount, and a heat source whose power is adjustable by a control mechanism having at least an indicative element corresponding to the expected indication on cooking appliance, which are combined with a mechanism to control or indication of the preparation time related to the food and tis amount.

### Background

In today's market of home appliances, the convenience and ease of use are becoming features most appreciated by consumers when choosing a new product. Not only in the purchase of household appliances, but also in the food business, the products of practical and rapid preparation are highly valued by the modern consumer who has a hectic routine, however, like to keep a healthy and tasty food.

The time to perform the various activities of the day is restricted and be able to spend less time on routine household activities such as cooking, is a desire of the modern consumer, who prefers to devote this time to leisure. However, eating well, with food prepared at home is also a desire of this consumer who appreciates good food.

The cooking equipment known in the state of the art partially exhibit this benefit to provide functions of pre-programmed preparations as, for example, keys for preparing pizza and frozen lasagna in the oven. These functions, however, are generally dedicated to processed foods and focus the preparation in the oven.

For the preparation of basic foods like rice, pasta and vegetables, for example, made in the stove table, or on a cooktop, equipments are not known which provide this intuitive preparing, with amounts and times already pre-set.

It is further noted the demand of another group of consumers who have no experience in the kitchen, but who wish to prepare their food at home. This lay user, being the one with low experience in the kitchen, cannot determine or establish any relationship between the type of food and the quantity being prepared, or the preparation time and the power of the burners of the cooking equipment. Knowledge of these factors is essential for the preparation of basic foods as they may directly affect the final result. If, for example, the food is cooked for a long time it may become too soft, mixing little water or use a lot of power, the food cannot reach the point of consumption, among other situations. Thus, the preparation of most foods requires attention to these factors that are not easy to control, especially for those who have never cooked or which have a low familiarity with the kitchen activities.

In the prior art, although there are some cooking utensils models for specific food preparation such as bread machine or electric rice cooker, no conventional food preparation equipment, such as stoves or cooktops, has a configuration capable of assisting users in food preparation correlating both the preparation time, the amount and type of food and the power of the burner to be used.

According to the prior art, note that some cooking equipment manufacturers provide means indicative of preparation time for some types of food, but there is no indication ratio to the power to be used and not also to the amount and utensil used in the preparation of that food. This type of equipment can be seen in document BR PI 0901417-9, which discloses basically a time recommendation panel, but does not effectively assists food preparation, considering all the factors and conditions that could influence in food preparation as mentioned previously.

In this sense, it is important to reiterate that each food type has specific requirements regarding the type and quantity of food, mixed ingredients, the preparation time, the power of the burner and also the type of utensil used to obtain a food properly prepared. It is obvious to those skilled in the art that changing any of these conditions, can directly affect the final food.

An example developed by the very depositor is described in BR1020120216868 document, which refers to the possibility of associating the control of gas flow intensity to the preparation technique to be used, for example, boiling, frying, braising, and the amount of water used in the cooking process. However, this document does not provide any solution facing the correlation between the utensil used, the type and the amount of prepared food, as well as the burner power setting and the preparation time.

Therefore, we note that the current state of the art lacks adequate elements and creations to promote effective assistance and guidance to the most appropriate food preparation, especially for those of low users experience in the kitchen. Furthermore, the prior art also lacks means able to effectively promote the correlation of conditions and features that effectively influence in food preparation, in an easy and practical way.

### Goals of the invention

In face of the above, is one of the objectives of the present invention provide a food preparation system, particularly for application in general cooking equipment being comprised of technical and functional aspects able to effectively assist and guide users to the correct preparation of food, in order to obtain the ideal point of these foods without requiring any experience or knowledge of cooking.

More preferably, it is objective of the present invention provide a food preparation system combining technical and functional aspects of the utensil preparation and specific characteristics of the cooking equipment. More particularly, the food preparation system of the present invention it is the combination of a cooking utensil having at least one indication which correlates the food with its quantity, a heat source of a cooking equipment having a power control mechanism with at least one indication corresponding to indication forseen in the cooking utensil, and means to control and indication of the food-related time and its quantity.

The food preparation system, as defined by the present invention have as an essential aim to assist and guide those users of little or no experience in food preparation. Specifically, through this system the user is able to get the preparation of certain food in a very simple and practical way by simply following the indicative guidelines present in the utensil and cooking equipment.

### Summary of the Invention

Therefore, in order to achieve and obtain the objectives and technical effects stated above, the present invention relates to a food preparation system, which is comprised of a cooking device and at least one cooking utensil, wherein said cooking equipment comprises adjustable heat sources whose powers are controlled by control mechanisms (M), while said cooking utensil comprises a wrapper wall provided with at least one indicating element which correlates the type of food to the quantity (Q) with which the food may be prepared, but said adjustable heat source has a control mechanism provided of at least one indicating element corresponding to the respective indication of the indicating element disposed in said envelope wall of the cooking utensil (U). The preparation system further comprises a time control device (T), whose purpose is to notify the user of the time or the time needed to get the best results because of the settings set on the indicative elements referred to in utensil and control mechanism of the cooking device.

According to a preferred embodiment of the present invention, said indicative elements are based on the type of food being prepared are combined with the amount of food being prepared, the latter being preferably of portion type, such as an individual, a couple or family portion.

Further, according to another embodiment of the present invention, the aforementioned indicative element provided in the cooking utensil comprises an indication of the volume of water to be mixed with the food, so as to match the amount needed to promote adequate choice of that food preparation.

Also, in order to help users even more in food preparation, the time control device may further comprise luminous or sound mechanisms, or both to warn users.

### Brief Description of the Drawings

The features, advantages and technical effects of the present invention, as mentioned above, will be best understood by one skilled in the art from the following detailed description, whose aim is simply to describe merely in exemplary manner, and not limitative, the preferred embodiments of the present invention with reference to the accompanying schematic drawings, in which:
Figure 1 shows a perspective view of a conventional cooking device that incorporates the food preparation system according to the present invention;

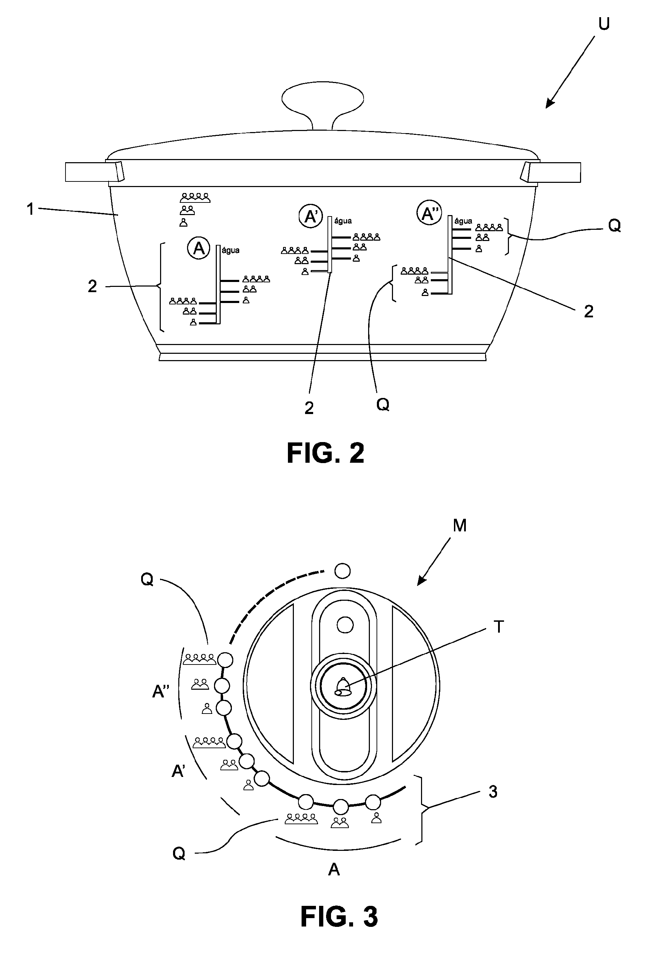

Figure 2 shows a view of the cooking utensil, according to the food preparation system, object of the present invention; and
Figure 3 shows a schematic and illustrative manner of handling the power control of the burner cooking equipment, according to a preferred embodiment of the present invention.

### Detailed Description of the Invention

According to the schematic figures above, some examples of possible embodiments of the present invention will be described in more detail below, however in purely exemplary and non-limiting way, since this food preparation system can be comprised of different technical, structural, aesthetic and dimensional characteristics without thereby deviates from the desired protection scope.

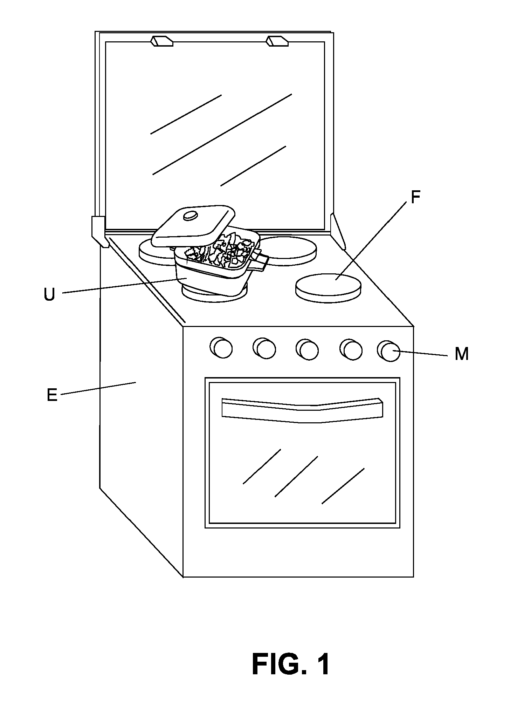

As is well known for those skilled in the art, and as illustrated in Figure 1, the cooking equipment (E), electric or gas, are conventionally composed of adjustable heat sources (F), such as burners or resistive means, whose powers are controlled by control mechanisms (M) arranged in the cooking equipment panel. Thus, through manipulation of said control mechanism (M), the user can increase or decrease the power of the respective heat sources (F) and, consequently, more or less heating of the cooking utensil (U) accommodated on said source heat. This type of procedure is widely known and practiced by any person during use of a cooking equipment.

According to one preferably advantageous embodiment of the present invention, the food preparation system is comprised of a cooking utensil (U) whose envelope wall 1 is provided with at least one indicative element 2 which correlates the type of food (A) with the quantity (Q) to be prepared, and adjustable heat source (F) provided with a control mechanism (M) provided with at least one indicative element 3 corresponding to the indication of the indicative element 2 disposed in the envelope wall 1 of cooking utensil (U).

More specifically, according to the food preparation system of the present invention, said indicative elements 2 and 3 are based on the type of food being prepared (A, A', A") in combination with the amount (Q) of food being prepared, that is, said amount (Q) may be indicative of portions, for example, individual, a couple or family. In many types of foods, this is usually mixed with a liquid for preparation, such as water for preparing pasta, rice or vegetables. This volume of liquid is also disposed in said indicative element 2 provided on the wall 1 of the utensil (U).

Thus, it should be appreciated by the skilled in the art, the user simply needs to enter the food within the cooking utensil (U) up to the indicator measure of its portion in sequence, and, if necessary, supplement with liquid to up to the mark indicating the corresponding portion, and positioning said utensil across the heat source (F) and manipulating control mechanism (M) to position it on the indication of the indicative element 3 corresponding to the indication of the indicative element 2 used on the utensil (U).

In addition, said control mechanism (M) comprises a time control device (T), providing the user with a tool to assist in the preparation of their food. Since, in this case, said control mechanism (M) is adjusted to calculate the necessary preparation time for a particular food (A) to an amount of members (Q).

As should be appreciated by those skilled in the art, the control device can be built into the control mechanism itself (M) and can be a standalone device comprised of a light, sound mechanism or both, in order to promote adequate warning to the user.

The way of example only, the food preparation system, object of the present invention can be comprised of a tool (U) whose envelope wall 1 is provided with indicative element 2, which comprises the indication of the food (A, A', A") as well as marking relating to quantity (Q) of said food (a) and may be an individual portion, for the couple or bigger for a family. Yet, said indicative element 2 comprises an indication of the water level to be mixed for the preparation of that particular food, and this indication corresponding to the amount of food chosen. In parallel, in said control mechanism (M), there is indicative element 3 corresponding to the type of food chosen for preparation and the amount that is being prepared. Thus, the user simply needs to manipulate the mechanism (M) in order to position it in accordance with the corresponding indication desired and chosen provided in said utensil (U).

Thus, the control mechanism (M) regulates the proper power for the preparation of that particular food and for that amount chosen.

Additionally, as mentioned above, said control mechanism (M) comprises a time control device (T), which will determine the optimum time period to achieve the best possible outcome, considering the type of food, the amount food, and the power determined by the control mechanism (M).

Finally, it is important to note that the above description is aimed only to describe the examples of some preferred embodiments of the food preparation system of the present invention. Therefore, as is well known to those skilled in the art, numerous modifications, variations and combinations of constructive elements are possible performing the same function in substantially the same way to achieve the same results, which are within the protection scope as defined by the appended claims.

## Claims

1. Food preparation system, comprising:
one cooking device (E) composed of adjustable heat sources (F) whose powers are controlled by control mechanisms (M); and cooking utensil (U), and a time control device (T) being **characterized in that**:
said cooking utensil (U) is constituted by an envelope wall (1) provided with at least one indicative element (2) which correlates the type of food (A) with the quantity (Q) of food to be prepared,
said adjustable heat source (F) is provided with a control mechanism (M) provided with at least one indicative element (3) corresponding to respective indication defined on the indicative element (2) disposed in said envelope wall (1) of the cooking utensil (U).
said time control device (T) is indicative of preparation time for each type and amount of food.

2. Food preparation system, according to claim 1, **characterized by** the fact that said indicative elements (2, 3) are based on the type of food being prepared (A, A', A") in combination with the quantity (Q) of food to be cooked.

3. Food preparation system, according to claim 1, **characterized by** the fact that said quantity (Q) information are representative of portions, such as an individual, a couple or family.

4. Food preparation system, according to claim 1, **characterized by** the fact that said indicative element (2) provided in the cooking utensil (U) further comprises an indication of the volume of water to be mixed with food.

5. Food preparation system, according to claim 1, **characterized by** the fact that said time control device comprises a light, audible mechanism or both.
